# EUROPEAN PATENT SPECIFICATION

(11) **EP 0 455 305 B1**
(45) Date of publication and mention of the grant of the patent: **07.02.1996**
(21) Application number: 91201035.2
(22) Date of filing: 02.05.1991
(51) Int. Cl.: G01S 7/48, A01J 7/00

(54) **An arrangement for determining the distance therefrom to an object**
Gerät zur Messung der Entfernung dieses Gerätes zu einem Objekt
Appareil pour déterminer la distance dudit appareil à un objet

(30) Priority: 04.05.1990 NL 9001076
(43) Date of publication of application: 06.11.1991
(60) Divisional application: 95202054.3
(73) Proprietor: C. van der Lely N.V., NL-3155 PD Maasland (NL)
(72) Inventor: van den Berg, Karel, NL-2971 BR Bleskensgraaf (NL); Fransen, René, NL-3135 ZD Vlaardingen (NL)
(74) Representative: Mulder, Herman

(56) References cited:
- EP-A- 0 360 354
- DE-A- 3 041 768
- GB-A- 1 276 769
- US-A- 3 897 151

## Description

The invention relates to an arrangement for determining the distance therefrom to an object, which arrangement comprises a housing having a window behind which there is located a reflecting element, and which arrangement furthermore includes a transmitter element and a receiver element, the said distance being measured by means of a radiation beam transmitted by the transmitter element and directed to the object via the reflecting element and the radiation reflected from the object and incident on the receiver element, whereby the reflecting element consists of two separate portions for reflecting the radiation beam transmitted by the transmitter element outward of the housing and the radiation originating from the object (A) towards the receiver element, respectively.

A suchlike arrangement is known from the GB patent specification 1 276 769. It is the object of the invention to achieve a favourable arrangement of the above defined type and suitable for specific conditions. According to the invention a suchlike arrangement is characterized in that the transmitter element and the receiver element are incorporated such in the housing that the part inside the housing of the radiation beam transmitted by the transmitter element and that incident on the receiver element, are substantially parallel and separated from each other.

A suchlike construction enables the arrangement to be rotated around its longitudinal axis while scanning within a plane having an angle relative to said longitudinal axis and thus without requiring much space whilst rotating. A suchlike construction can particularly favourably be used on a robot's arm for scanning e.g. the teats of a cow's udder.

The object of the invention can further be achieved favourably by arranging and/or implementing the two portions of the reflecting element of the invention in such a manner, that at least the transmitter radiation beam portion before reflection and the receiver radiation beam portion after reflection by the reflecting element are separated from the housing wall. In such a position it is possible, and in given applications acceptable, that, before being reflected, the transmitter radiation beam intersects the receiver radiation beam to be reflected by the reflector. This may produce a small amount of stray light. When, however, a very exact reception is desired, then, in accordance with the invention, it is more advantageous when the transmitter radiation beam and the receiver radiation beam are separated fully from each other inside the housing. Therefore, in a specific embodiment of the invention, the reflector reflecting the transmitter radiation beam is arranged in a higher position than the reflector of the receiver radiation beam and, relative to the window, therebehind.

In order to obtain a very good reception, in accordance with the invention, it is furthermore advantageous when the transmitter radiation beam and the receiver radiation beam are separated from each other inside the housing by means of structural elements.

A practical embodiment of the present invention is obtained when, in accordance with the invention, the transmitter element and the receiver element are located, relative to the length of the housing, at a slight distance below the relevant reflecting element. This renders it possible for the arrangement to be of a compact design and, in addition, for the electronics associated with the transmitter and the receiver elements to be accommodated inside the housing. Therefore, in accordance with the invention, the arrangement is furthermore characterized in that below the transmitter element and the receiver element inside the housing there is provided a space which is of such a size that at least the control electronics for the transmitter and receiver elements can be accommodated therein. When, however, the invention is applied in the arrangement of the type as described in the said European application, then, in accordance with the invention, it is also possible to accommodate the transmitter element and the receiver element at and/or near the lower side of the housing.

In accordance with the invention, a first embodiment of such an application is an arrangement wherein the reflecting element is constituted by two reflectors which are arranged at different heights and, relative to the window, one behind the other. In a further embodiment in accordance with the invention, the reflecting element is constituted by two reflectors which are arranged at an angle relative to each other. Alternatively, of course, the two embodiments can be used in combination.

In addition to the fact that the transmitter radiation beam and the radiation originating from the object are not separated, further disadvantages are that dispersed light originating from the environment is incident on the receiver element via the inner wall of the housing and that an excessive interference occurs inside the housing. Therefore, in accordance with the invention, the inner wall of the housing includes means to counteract reflection of radiation inside the housing. Counteracting of reflection can be effected in various manners. Thus, in accordance with the invention, the inner wall of the housing may be made of radiation-absorbing material. Alternatively, in accordance with the invention, the inner wall of the housing may be provided with a relief structure. It will be obvious that these two measures can also be employed conjointly.

As stated in the preamble, the housing of the arrangement includes a window. This window is of such a shape that both the transmitted radiation beam and the radiation reflected from the object pass through one single aperture. Consequently, the total window aperture, through which also stray light from the environment is incident, is unnecessarily large. In a specific embodiment of the invention, the window therefore consists of a portion for allowing out the transmitted radiation beam and one for allowing in the radiation originating from the object. This structure of the window in particular contributes to the fact that the radiation transmitted by the transmitter and that received by the receiver remain separate inside the housing.

Both with a one-part window and with a two-part window, the arrangement can function properly. However, dirt from the environment may render it necessary to regularly clean the receiver and the transmitter. Because of the location of the transmitter and the receiver inside the housing, this cleaning operation may cause difficulties. It is therefore advantageous, in accordance with the invention, for the window to be sealed. This sealing means may be made of glass or a translucent synthetic resin material. Materials of this type frequently evidence fracture and/or reflection phenomena to an unacceptable extent. According to the invention, this disadvantage can be obviated to at least a considerable extent by coating the window with an anti-reflection layer, which may be provided at the inner side thereof.

A particularly adequate measure of preventing reflection inside the housing is obtained by using semi-transparent material. Therefore, in accordance with the invention, the device may have a housing made of a semi-transparent material.

Although the cleaning of the window can very well be done manually, this is not always efficient in modern usage. Therefore, in accordance with the invention, the arrangement can also be characterized in that there are provided means for automatic cleaning of the window.

The above-mentioned contamination of the window, or, possibly, of the inner side of the housing can also be counteracted, in accordance with the invention, by covering the window by means of a cover when the arrangement is inoperative.

In accordance with the invention, a further measure of preventing reflection inside the housing is characterized in that the housing is tubular in shape. Hereby it is achieved that the radiation dispersed by the wall, at least a major portion thereof, reaches in a very indirect and attenuated manner the lowermost portion of the housing, which, in this respect, enables an advantageous positioning of the receiver. As regards the structure, the positioning of transmitter and receiver is also advantageous when, in accordance with the invention, the transmitter and receiver are both located in the plane of a cross-section of the tube.

The features of the invention mentioned so far mainly relate to measures which significantly increase the quality of the distance-to-object measurement. It is, however, also possible to determine the angle at which an object is located relative to the arrangement using a structural extension, goniometrical laws and a geometrical system of axes. To this end it is necessary that the arrangement does not only emit radiation in one fixed direction, but also that it can cover a predetermined region therewith. Therefore, in accordance with the invention, the arrangement can furthermore be characterized in that the housing is movable about its longitudinal axis.

Although the above-described arrangement functions very properly, it is vulnerable; an unfortunate collision with a moving object from the -environment may cause the rotary movement to be distorted. In accordance with the invention, the vulnerability can be reduced by assembling the housing from an outer housing and an inner housing, which inner housing is movable relative to the outer housing, while both housings are provided with a window. A still further measure of reducing the vulnerability is characterized in that the outer housing is sealed at its upper side. In accordance with the invention, in this embodiment of the arrangement it is advantageous for the inner housing to be made of a semi-transparent material. In the embodiment comprising an inner housing and an outer housing, it must yet remain possible to determine the angle, in a horizontal plane, at which the object is located with respect to the arrangement. This can be achieved by having both housings rotate about their longitudinal axes. However, this is not imperative. In accordance with the invention, a more advantageous embodiment consists in that the window in the outer housing extends, relative to the axis of rotation of the outer housing, in a tangential direction through a larger peripheral plane than the window of the inner housing. In such an embodiment, the outer housing may be designed in a fixed position.

In accordance with a preferred embodiment of the invention, the window extends through 120° with a uniform distribution of this range on either side of the centre of the inner window, when the inner housing is in its initial position.

In the embodiment comprising an inner housing and an outer housing, it is furthermore possible to seal both windows with translucent material. However, this need not by any means be the most advantageous embodiment. In accordance with the invention, in particular, only the window of the inner housing can be sealed. So as to limit contamination of the inner window to the optimal extent, the arrangement in accordance with the invention can furthermore be characterized in that the inner housing, the arrangement being inoperative, is rotated such relative to the outer housing that the windows do not overlap. Another method of limiting contamination can be effected, in accordance with the invention, by providing the outer housing with a cover for covering the window when the arrangement is inoperative. The contamination, which, in spite of all measures, will still penetrate to between the inner housing and the outer housing, may hinder the proper functioning of the arrangement. In order to prevent this from happening, the accumulated dirt should be removed. In accordance with the invention, this is realized by providing the outer housing near its lower end with at least one aperture, through which the dirt can be removed directly or with the aid of a forced flow of air or water.

The arrangement, which is suitable for use in many situations, can be used to great advantage in an automated milking system. In accordance with the invention, the arrangement is particularly suitable for determining the distance thereof to one or more teats of the udder of a milch animal. The determination of the distance to the teats can be effected from different positions. In accordance with the invention, an advantageous reference position is obtained when the arrangement is mounted on the robot arm of an automatic milking machine.

Because of the intensive use of the arrangement in automatic milking, it is necessary to check regularly whether the window is clean enough to ensure an accurate measurement. In order to be able to measure the degree of contamination of the window, the arrangement in accordance with the invention is characterized in that, the robot arm being in an initial position, it can co-operate with testing means, e.g. an artificial teat, placed at a known distance therefrom.

In a further advantageous embodiment of the invention, the transmitter element is a laser. The use of the laser is particularly suitable, in accordance with the invention, when the transmitted radiation is in a wavelength range of from 600 to 900 nms, preferably of from 780 to 830 nms.

The range of usage of the arrangement extends through a range of automatic milking devices, suitable for various types of milch animals. The colour of the teats may be varied for different types of milch animals. The invention takes this into account in that the wavelength range of the transmitted radiation is tuned to the colour(s) of the teats. Theoretically it is, however, also conceivable that the colour of the object is adapted to render it optimally suitable for co-operation with the distance measuring arrangement. To realise this, the arrangement may be characterized in that the teats are provided with a colouring matter.

For a better understanding of the invention and to show how the same may be carried into effect, reference will now be made, by way of example, to the accompanying drawings, in which:
Figure 1 is, in a first embodiment, a cross-sectional view of the measuring arrangement in accordance with the invention;
Figure 2 is, in a second embodiment, a cross-sectional view of the measuring arrangement in accordance with the invention;
Figure 3 is a cross-sectional view of the arrangement housing and shows its relief structure;
Figure 4 is a front view of the housing and shows a multi-section window;
figure 5 is a cross-sectional side view of the view of Figure 4;
Figure 6 is a side view of a housing portion including, in a first embodiment, a cover for covering the window in the housing and the control means used therefor;
Figure 7, too, is a side view of a housing portion including, in a second embodiment, a covering means constituted by a slide ring in combination with a cleaning means;
Figure 8 is a plan view of Figure 7;
Figure 9 is a partly cut-away side view of an arrangement including an inner housing and an outer housing, and
Figure 10 is a plan view of the arrangement mounted on the end of a robot arm of an automatic milking machine.

In the drawings, corresponding components. are denoted by the same reference numerals. Furthermore, the invention is in no way limited to the embodiments shown and described here; they only serve as an illustration of the inventive idea.

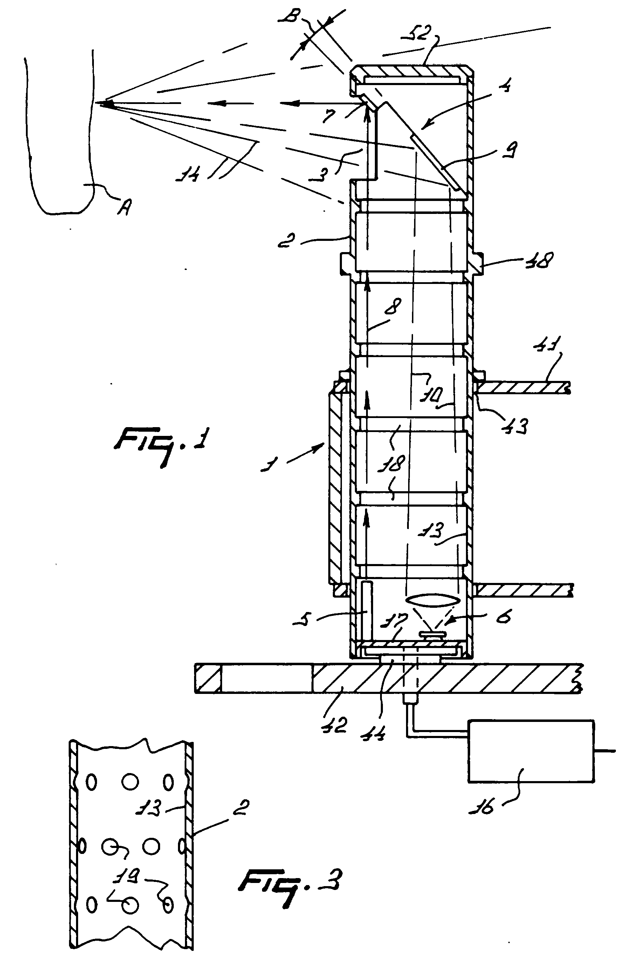

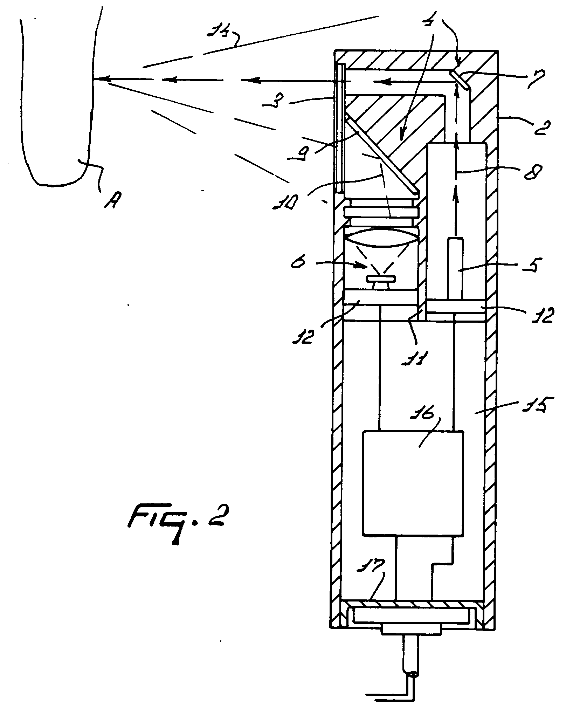

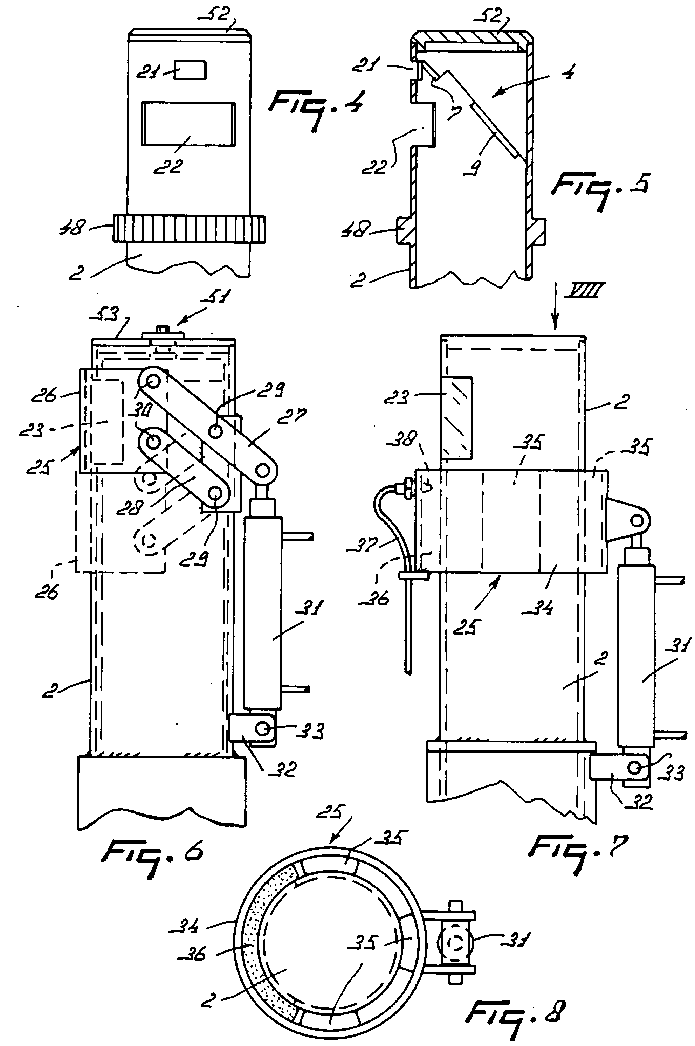

Figure 1 shows an arrangement for determining the distance therefrom to an object in accordance with the invention; the arrangement 1 measures the distance to the object A and comprises a housing 2, a window 3, a reflecting element 4, a transmitter element 5 and a receiver element 6. The reflecting element 4 includes the reflector 7 for reflecting the radiation 8 originating from the transmitter element 5 and the reflector 9 for reflecting the radiation 10 reflected from the object. During operation, the transmitter element 5 transmits via the reflector 7 through the window 3 light rays to the objects A, where the radiation is reflected and dispersed. Part of this reflected and dispersed radiation returns to the housing again via the window 3 and is directed to the receiver element 6 by the reflector 9. In the embodiments of Figures 1 and 2, the transmitted radiation beam is reflected horizontally. For the purpose of separating the outgoing radiation beam 8 from the incident radiation beam 10, the reflectors 7 and 9 of the reflector element 4 are arranged at an angle B. By means of the angle B it is achieved that the radiation beams 8 and 10 remain separated from each other. Depending on the distance to the elements 5 and 6, the angle B is also such that the radiation beams cannot reach the inner wall 13 of the housing. The separation of the beams is possible in the first instance by arranging the reflectors 7 and 9 at different heights and, with respect to the window 3, one behind the other. These conditions yield four possible configurations, two of which are shown in Figures 1 and 2. These Figures show the configurations wherein the reflector 7 for the transmitted radiation beam is disposed above the reflector 9 for the received radiation beam. In certain cases, this configuration is preferred to that wherein the reflector 9 for the received beam is located above the reflector 7. More specifically, this is the case when the arrangement is limited in its vertical movement by e.g. a ceiling or a similar obstacle. Since the transmitted radiation beam 8 is reflected and slightly dispersed by the object as diffuse light 14, it is irrelevant whether the reflector for the received radiation beam is located above, beside or below the reflector 7 of the transmitted radiation beam. Consequently, the configurations of Figures 1 and 2 render it possible for the arrangement to be located very closely to a ceiling, while measurements by means of a horizontally reflected transmitted radiation beam remain possible.

Figure 2 shows a further improvement of the reflector arrangement. In this Figure, the reflector 7 for the transmitted radiation beam 8 is located, relative to the window 3, behind the reflector 9. Since also the transmitter element 5 is located, with respect to the window 3, behind the receiver element 6, this configuration effects that the transmitted radiation beam 8 does not intersect the incident received radiation beam 10, so that no dispersion occurs.

An optimum signal reception is effected not only by separating the radiation beams 8, 10, but also by inter alia counteracting dispersions and reflections inside the housing and by limiting incident ambient light. In Figure 2, the transmitted radiation beam 8 and the received radiation beam 10 are separated from each other by means of a separator element 11. This element is opaque. Hereby it is ensured that the quantity of dispersed light, which e.g. is produced by incident ambient light coming into contact with the transmitted radiation beam, is reduced still further.

In Figure 2, the receiver element 6 and the transmitter element 5 are fitted closely below the reflector element 4. For that purpose, the carrier elements 12 are clamped with a tight fit in the relevant space. Hereby there is created inside the housing 2 a space 15 which is suitable for the accommodation of at least the control electronics 16 of the transmitter and receiver elements. In Figure 1, the transmitter and the receiver elements bear on the bottom 17 of the housing and the control electronics is installed outside the housing.

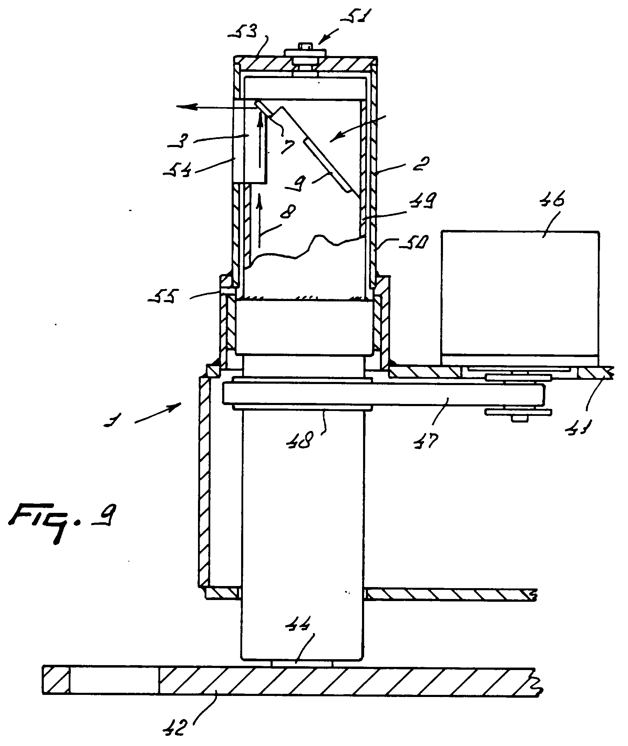

The counteracting of reflections is effected inter alia by the provision of relief elements. The relief elements may consist of bulges 18 which, as shown in the embodiment of Figure 1, are arranged at an interspace of 30 mms along the entire circumference of the wall 13 and transversely to the direction of the radiation beams 8, 10. However, an advantageous relief structure is also obtained by applying spherical bulges or recesses 19, as is shown schematically in Figure 3. The counteracting of incident ambient light is effected by reducing the dimensions of the window 3 to an aperture size required for the outgoing and ingoing radiation beams 8 and 10, respectively. Figure 4 clearly illustrates that, for that purpose, the window 3 is divided into two portions: i.e. a window portion 21 for the outgoing radiation beam 8 and a window portion 22 for the light reflected from and dispersed by the object.

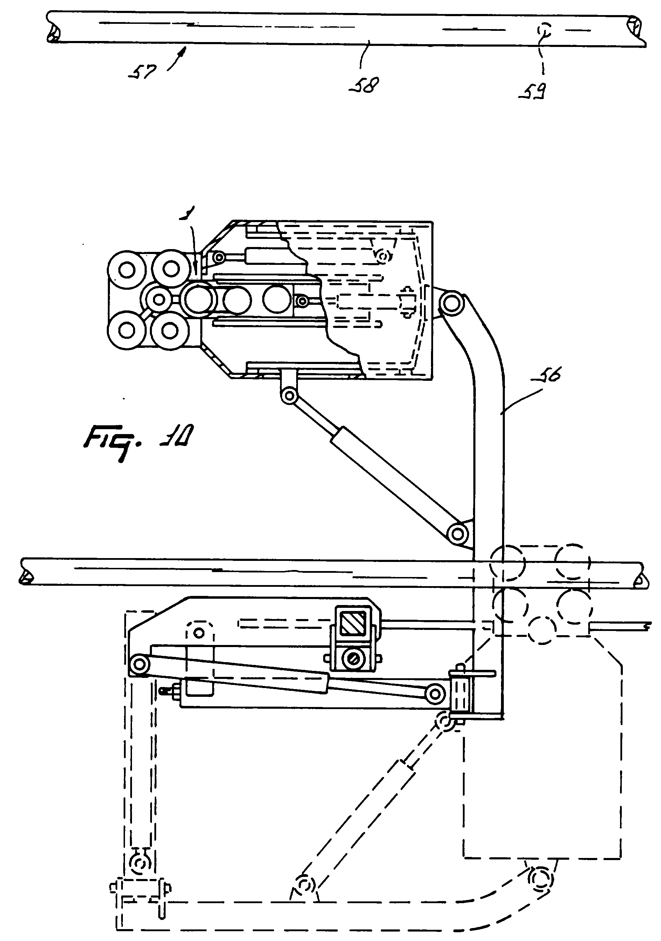

The window of the arrangement may be in the form of an aperture. Figures 6 and 7 show an embodiment of the arrangement 1 having a sealed window 23. This sealing may consist of glass or a translucent synthetic resin material. So as to prevent the occurrence of reflections because of the sealed window 23, in the embodiment of Figure 1 the inner side of the sealed window 23 is coated with an antireflection layer. A further measure to prevent reflections can be obtained by making the housing or, in case of the embodiment in Figure 2, the housing of only the receiver element of semi-transparent material. The light incident on the inner wall 13 is then allowed to pass, whilst light from the outside cannot enter.

The sealing of the window 3 prevents the penetration of dirt into the housing. However, a disadvantage is that the cover itself may get dirty, which might disadvantageously affect the distance measurement. For this reason there is provided a special means 25 which covers the window during the major portion of the time. This cover is only removed when a measuring operation is actually being performed with the arrangement. This cover means can also be used with a non-sealed window.

In Figure 6, the cover plate 26 is suspended from a parallelogram construction formed by the arms 27 and 28. In this structure, the hinging pins 29 are connected rigidly to the housing 2. The hinging pins 30 connect the parallelogram arms 27 and 28 to the cover plate 26. At its end remote from the plate 26, the parallelogram arm 27 is extended such as to be capable of acting as a lever. In its lever function, the arm 27 is moved by means of a cylinder 31 which bears against the housing itself, i.e. via a support 32, to which the cylinder 31 is connected via a hinge pin 33. The lifting cylinder 31 can be moved by means of both air and liquid. However, it is alternatively possible to replace the cylinder 31 by a mechanism provided with a gear rack or by a mechanism having a spring and rods.

In a further embodiment of the means 25 as shown in Figure 7, the parallelogram construction is replaced by a sealing ring 34 which envelops the housing and is slidable along the housing by means of a lifting cylinder 31. During this sliding movement, the sealing ring is guided by the guide members 35 (Figure 8). The guide members may be in the form of bearings, self-lubricating synthetic resin materials or a modern plastics material having a low coefficient of sliding resistance.

Since, in spite of the cover, the window 3 can still become dirty, the two embodiments of the cover means 25 can be equipped with means for automatic cleaning the window. To that end, the cover plate portion present in front of the window is fitted with a sponge 36. This sponge can be wetted with a cleaning agent via a supply line 37 to terminate in the injection point 38. In Figure 7, this injection point is located at the upper side of the sponge, but different positions are alternatively possible. It is also conceivable for the cleaning agent supply line 37 to be branched into various injection points.

In an advantageous embodiment, the arrangement is in the form of a tube, as is shown in the embodiments of Figure 1 and 2. In Figure 1, the arrangement 1 is maintained in position by a holder 41 and a carrier 42. For the sake of the rotary movement of the housing 2, this housing is bearing-supported relative to the holder 41 and the carrier 42 by means of a sliding member 43 and the bearing elements 44, respectively. The sliding member 43 may be designed as a bearing, a self-lubricating ring or a ring made of a modern plastics material having a low coefficient of sliding resistance.

The housing 2 as is shown in Figure 9 can be put into movement by means of a motor 46 and an endless element 47 to engage a drive means 48 at the housing 2. This drive means 48 is an annular ridge having a flat side or a welded annular element having a flat side, around which the endless element 47, in particular a belt, can be passed. The drive means 48 may alternatively be designed as a cam disc, the endless element 47 then including a profiled belt or chain to engage the cam disc.

In addition, Figure 9 shows an embodiment of the arrangement 1 wherein the housing 2 is assembled from an inner housing 49 and an outer housing 50. The inner housing 49 is rotatable about the common axis of the two housings. The axis of rotation extends through the centring point 51 in the upper ends of the two housings. Both the upper end of the inner housing and the upper end of the outer housing completely seal the relevant housing at its upper side. At the level of the window 3 of the inner housing 49, the outer housing 50 has a window 54.

With a view to determining the location of the object A, the inner housing 49 is reciprocated by the motor with the aid of a drive element. Using the radiation beams, a limited area is checked for the presence of an object A. In this situation, a region of more than 120° is covered in a horizontal plane. Since the outer housing 50 is in a fixed position, the window 54 thereof covers a much wider peripheral plane than the window of the inner housing 49. In the embodiment of Figure 9, this range is approximately 120° with a uniform distribution thereof on either side of the centre of the inner window, when the inner housing is in its starting position.

In comparison with the single housing, the structure comprising two housings provides additional possibilities as regards the cleaning of the arrangement. Thus, it is possible to rotate the inner housing 49 such that the inner window is remote from the window aperture of the outer window. In the case wherein the inner window is open, this reduces the risk of dirt penetrating into the housing and/or, when the inner window is covered, contamination of this inner window. When the window in the outer housing 50 is sealed, these problems do not occur for the inner window. In the case wherein only the window in the innerhousing 49 is sealed and consequently dirt can collect between the two housings, the outer housing is provided near its lower side with flushing holes 55, through which dirt can be removed with the aid of air or water. An other solution to this problem may be provided by the use of gasket rings located between the two housings and immediately below the window apertures.

A specific use of the arrangement 1 is obtained when it is employed to determine the position of the teats of a cow. Hereby it is rendered possible to connect the teat cups of a milking plant to the teats of an animal. This action is essential in an automatic milking system. Then, as is shown in Figure 10, the teat cups and also the arrangement 1 are mounted on the end of a robot arm 56 which is controlled by means of the measuring data from the arrangement 1. Since the arrangement can easily be contaminated during automatic milking, a regular check of the cleanliness of the windows is imperative. To that end, the arrangement 1, when it is in an initial position, can co-operate with a test means provided at a known distance therefrom. Preferably, this test means is a rod 59 having the thickness of a teat. In Figure 10, the robot arm has, in its initial position, a fixed location relative to the milking parlour 57 where the cow is being milked. Opposite to the initial position of the robot arm carrying the arrangement 1, there is fitted on the frame portion 58 of the milking parlour 57 a test means constituted by the vertical rod 59. The rod 59 is uniformly black, so that it is checked whether the window 3 is still bright enough to determine the location of the object which is most difficult to detect.

In the embodiments, the transmitter element 5 is in the form of a laser. During transmission, use is made of radiation in the frequency range of from 780 to 830 nms. Depending on the type of animals or the species of animals to be milked and, hence, on the average colour of the teats, this frequency range can be shifted for the purpose of obtaining a wavelength range of the transmitted radiation, which is tuned to the colour of the teats.

## Claims

1. An arrangement (1) for determining the distance therefrom to an object (A), which arrangement comprises a housing (2) having a window (3) behind which there is located a reflecting element (4), and which arrangement (1) furthermore includes a transmitter element (5) and a receiver element (6), the said distance being measured by means of a radiation beam (8) transmitted by the transmitter element (5) and directed to the object (A) via the reflecting element (4) and the radiation (14) reflected from the object (A) and incident on the receiver element (6), whereby the reflecting element consists of two separate portions (7, 9) for reflecting the radiation beam (8) transmitted by the transmitter element outward of the housing, and the radiation (14) originating from the object (A) towards the receiver element, respectively, characterized in that the transmitter element (5) and the receiver element (6) are incorporated such in the housing that the part inside the housing of the radiation beam transmitted by the transmitter element and that incident on the receiver element, are substantially parallel and separated from each other.

2. An arrangement as claimed in claim 1, characterized in that the two portions (7, 9) of the reflecting element (4) are arranged and/or implemented in such a manner, that at least the transmitter radiation beam portion before reflection (8) and the receiver radiation beam portion after reflection (10) by the reflecting element are separated from the housing wall (13).

3. An arrangement as claimed in claim 1, characterized in that the transmitter radiation beam (8) and the receiver radiation beam (10, 14) are separated fully from each other inside the housing (2).

4. An arrangement as claimed in claim 1, 2 or 3, characterized in that the reflecting element (4) is constituted by two reflectors (7, 9) which are arranged at different heights and, relative to the window (3), one behind the other.

5. An arrangement as claimed in any one of the preceding claims, characterized in that the reflecting element (4) is constituted by two reflectors (7, 9) which are arranged at an angle (B) relative to each other.

6. An arrangement as claimed in any one of the preceding claims, characterized in that the reflector (7) reflecting the transmitter transmission beam is arranged in a higher position than the reflector (9) of the receiver radiation beam (10, 14) and, with respect to the window (3), therebehind.

7. An arrangement as claimed in any one of the preceding claims, characterized in that the transmitter radiation beam (8) and the receiver radiation beam (10, 14) are separated from each other inside the housing (2) by means of structural elements (11).

8. An arrangement as claimed in any one of the preceding claims, characterized in that the transmitter element (5) and the receiver element (6) are located, relative to the length of the housing (2), at a slight distance below the relevant reflecting element (7, 9).

9. An arrangement as claimed in any one of the preceding claims, characterized in that below the transmitter element (5) and the receiver element (6) inside the housing (2) there is provided a space which is of such a size that at least the control electronics for the transmitter (5) and the receiver elements(6) can be accommodated therein.

10. An arrangement as claimed in any one of the preceding claims, characterized in that the transmitter element (5) and the receiver element (6) are accommodated at and/or near the lower side of the housing (2).

11. An arrangement as claimed in any one of the preceding claims, characterized in that the housing (2) is tubular in shape.

12. An arrangement as claimed in any one of the preceding claims, characterized in that the transmitter (5) and the receiver (6) are both located in the plane of a cross-section of the tube.

13. An arrangement as claimed in any one of the preceding claims, characterized in that the housing (2) is movable about its longitudinal axis.

14. An arrangement as claimed in any one of the preceding claims, characterized in that the transmitter element (5) is a laser.

15. An arrangement as claimed in any one of the preceding claims, characterized in that the transmitted radiation is in a wavelength range of from 600 to 900 nms, preferably of from 780 to 830 nms.

## Patentansprüche

1. Vorrichtung (1) zur Messung der Entfernung zu einem Objekt (A), mit einem in einem Gehäuse (2) ausgebildeten Fenster (3), hinter dem ein Reflektorelement (4) angeordnet ist, sowie mit einem Sendeelement (5) und einem Empfängerelement (6), wobei die Entfernung mittels eines Lichtstrahles (8) gemessen wird, der von dem Sendeelement (5) ausgesandt und über das Reflektorelement (4) auf das Objekt (A) gerichtet wird und als von dem Objekt (A) reflektierte Strahlung (14) auf das Empfängerelement (6) auftrifft, und wobei das Reflektorelement zwei separate Abschnitte (7, 9) aufweist, um den von dem Sendeelement ausgesandten Lichtstrahl (8) nach außen bzw. die von dem Objekt (A) kommende Strahlung (14) zu dem Empfängerelement umzulenken,
dadurch gekennzeichnet, daß das Sendeelement (5) und das Empfängerelement (6) in dem Gehäuse derart angeordnet sind, daß der von dem Sendeelement ausgesandte Lichtstrahl und der auf das Empfängerelement auftreffende Lichtstrahl innerhalb des Gehäuses im wesentlichen parallel zueinander verlaufen und voneinander getrennt sind.

2. Vorrichtung nach Anspruch 1,
dadurch gekennzeichnet, daß die beiden Abschnitte (7, 9) des Reflektorelementes (4) derart angeordnet und/oder ausgebildet sind, daß zumindest der gesendete Lichtstrahl (8) vor der Reflexion und der nach der Reflexion durch das Reflektorelement empfangene Lichtstrahl (10) von der Gehäusewand (13) getrennt sind.

3. Vorrichtung nach Anspruch 1,
dadurch gekennzeichnet, daß der gesendete Lichtstrahl (8) und der empfangene Lichtstrahl (10, 14) innerhalb des Gehäuses (2) vollständig voneinander getrennt sind.

4. Vorrichtung nach den Ansprüchen 1, 2 oder 3,
dadurch gekennzeichnet, daß das Reflektorelement (4) durch zwei Reflektoren (7, 9) gebildet ist, die in unterschiedlicher Höhe und in bezug auf das Fenster (3) hintereinander angeordnet sind.

5. Vorrichtung nach einem der vorhergehenden Ansprüche, dadurch gekennzeichnet, daß das Reflektorelement (4) durch zwei Reflektoren (7, 9) gebildet ist, die relativ zueinander in einem Winkel (B) angeordnet sind.

6. Vorrichtung nach einem der vorhergehenden Ansprüche, dadurch gekennzeichnet, daß der den gesendeten Lichtstrahl reflektierende Reflektor (7) in einer höheren Position als der Reflektor (9) für den empfangenen Lichtstrahl (10, 14) und in bezug auf das Fenster (3) hinter diesem angeordnet ist.

7. Vorrichtung nach einem der vorhergehenden Ansprüche, dadurch gekennzeichnet, daß der gesendete Lichtstrahl (8) und der empfangene Lichtstrahl (10, 14) innerhalb des Gehäuses (2) mittels struktureller Elemente (11) voneinander getrennt sind.

8. Vorrichtung nach einem der vorhergehenden Ansprüche, dadurch gekennzeichnet, daß das Sendeelement (5) und das Empfängerelement (6) bezogen auf die Länge des Gehäuses (2) mit geringem Abstand unter dem jeweiligen Reflektorelement (7, 9) angeordnet sind.

9. Vorrichtung nach einem der vorhergehenden Ansprüche, dadurch gekennzeichnet, daß unterhalb des Sendeelementes (5) und des Empfängerelementes (6) in dem Gehäuse (2) ein Raum vorgesehen ist, der so bemessen ist, daß zumindest die Steuerelektronik für das Sendeelement (5) und das Empfängerelement (6) darin unterzubringen ist.

10. Vorrichtung nach einem der vorhergehenden Ansprüche,
dadurch gekennzeichnet, daß das Sendeelement (5) und das Empfängerelement (6) an und/oder nahe der unteren Seite des Gehäuses (2) angeordnet sind.

11. Vorrichtung nach einem der vorhergehenden Ansprüche,
dadurch gekennzeichnet, daß das Gehäuse (2) rohrförmig ausgebildet ist.

12. Vorrichtung nach einem der vorhergehenden Ansprüche,
dadurch gekennzeichnet, daß der Sender (5) und der Empfänger (6) gemeinsam in einer Querschnittsebene des Rohres liegen.

13. Vorrichtung nach einem der vorhergehenden Ansprüche,
dadurch gekennzeichnet, daß das Gehäuse (2) um seine Längsachse zu bewegen ist.

14. Vorrichtung nach einem der vorhergehenden Ansprüche,
dadurch gekennzeichnet, daß das Sendeelement (5) ein Laser ist.

15. Vorrichtung nach einem der vorhergehenden Ansprüche,
dadurch gekennzeichnet, daß die Wellenlänge der ausgesandten Strahlung in einem Bereich von 600 bis 900 nms, vorzugsweise von 780 bis 830 nms liegt.

## Revendications

1. Dispositif (1) pour déterminer la distance entre lui-même et un objet (A), lequel dispositif comprend un boîtier (2) ayant une fenêtre (3) derrière laquelle est situé un élément réfléchissant (4), lequel dispositif comprend en outre un élément émetteur (5) et un élément récepteur (6), ladite distance étant mesurée au moyen d'un faisceau de rayonnement (8) émis par l'élément émetteur (5) et dirigé vers l'objet (A) par l'intermédiaire de l'élément réfléchissant (4) et du rayonnement (14) réfléchi par l'objet (A) et incident sur l'élément récepteur (6), l'élément réfléchissant se composant de deux parties séparées (7, 9) pour réfléchir respectivement le faisceau de rayonnement (8) émis par l'élément émetteur vers l'extérieur du boîtier, et le rayonnement (14) provenant de l'objet (A) vers l'élément récepteur,
**caractérisé** en ce que l'élément émetteur (5) et l'élément récepteur (6) sont incorporés dans le boîtier de telle manière que la partie, à l'intérieur du boîtier, du faisceau de rayonnement émis par l'élément émetteur, et celle, incidente sur l'élément récepteur, sont sensiblement parallèles et séparées l'une de l'autre.

2. Dispositif selon la revendication 1, caractérisé en ce que les deux parties (7, 9) de l'élément réfléchissant (4) sont disposées et/ou réalisées de telle manière qu'au moins la partie du faisceau de rayonnement de l'émetteur avant réflexion (8) et la partie du faisceau de rayonnement reçu après réflexion (10) par l'élément réfléchissant sont séparées de la paroi (13) du boîtier.

3. Dispositif selon la revendication 1, caractérisé en ce que le faisceau de rayonnement émis (8) et le faisceau de rayonnement reçu (10, 14) sont complètement séparés l'un de l'autre à l'intérieur du boîtier (2).

4. Dispositif delon la revendication 1, 2 ou 3, caractérisé en ce que l'élément réfléchissant (4) est constitué par deux réflecteurs (7, 9) qui sont disposés à des hauteurs différentes et, par rapport à la fenêtre (3), l'un derrière l'autre.

5. Dispositif selon l'une quelconque des revendications précédentes, caractérisé en ce que l'élément réfléchissant est constitué par deux réflecteurs (7, 9) qui sont disposés selon un angle (B), l'un par rapport à l'autre.

6. Dispositif selon l'une quelconque des revendications précédentes, caractérisé en ce que le réflecteur (7) réfléchissant le faisceau émis par l'émetteur est disposé en position plus haute que le réflecteur (9) du faisceau de rayonnement (10, 14) allant au récepteur, et, par rapport à la fenêtre (3), derrière celle-ci.

7. Dispositif selon l'une quelconque des revendications précédentes, caractérisé en ce que le faisceau de rayonnement (8) de l'émetteur et le faisceau de rayonnement (10,14) vers le récepteur sont séparés l'un de l'autre à l'intérieur du boîtier (2) au moyen d'éléments structurels (11).

8. Dispositif selon l'une quelconque des revendications précédentes, caractérisé en ce que l'élément émetteur (5) et l'élément récepteur (6) sont situés, par rapport à la longueur du boîtier (2), à une légère distance en dessous de l'élément réflecteur (7, 9) correspondant.

9. Dispositif selon l'une quelconque des revendications précédentes, caractérisé en ce qu'il est prévu, en dessous de l'élément émetteur (5) et de l'élément récepteur (6) à l'intérieur du boîtier (2), un espace de taille telle qu'il soit possible d'y loger au moins l'électronique de commande des éléments émetteur (5) et récepteur (6).

10. Dispositif selon l'une quelconque des revendications précédentes, caractérisé en ce que l'élément émetteur (5) et l'élément récepteur (6) sont logés sur le côté inférieur du boîtier (2) et/ou près dudit côté.

11. Dispositif selon l'une quelconque des revendications précédentes, caractérisé en ce que le boîtier (2) est de forme tubulaire.

12. Dispositif selon l'une quelconque des revendications précédentes, caractérisé en ce que l'émetteur (5) et le récepteur (6) sont tous deux situés dans le plan d'une section transversale du tube.

13. Dispositif selon l'une quelcnque des revendications précédentes, caractérisé en ce que le boîtier (2) est mobile autour de son axe longitudinal.

14. Dispositif selon l'une quelconque des revendications précédentes, caractérisé en ce que l'élément émetteur (5) est un laser.

15. Dispositif selon l'une quelconque des revendications précédentes, caractérisé en ce que le rayonnement émis est dans le domaine de longueurs d'ondes compris entre 600 et 900 nanomètres, de préférence compris entre 780 et 830 nanomètres.
